# FASCICULE DE BREVET EUROPEEN

(11) **EP 3 853 053 B1**
(45) Date de publication et mention de la délivrance du brevet: **14.09.2022**
(21) Numéro de dépôt: 19790675.3
(22) Date de dépôt: 19.09.2019
(51) Int. Cl.: B60J 5/06

(54) **CARROSSERIE, NOTAMMENT DE VÉHICULE ROUTIER OU FERROVIAIRE**
KAROSSERIE, INSBESONDERE FÜR EIN STRASSEN- ODER SCHIENENFAHRZEUG
BODYWORK, IN PARTICULAR FOR A ROAD OR RAIL VEHICLE

(30) Priorité: 20.09.2018 FR 1871066
(43) Date de publication de la demande: 28.07.2021
(73) Titulaire: S.A. Libner, 79400 Saint-Maixent l'Ecole (FR)
(72) Inventeur: LIBNER, Hervé, 79400 SAINT MAIXENT L'ECOLE (FR)
(74) Mandataire: Ipsilon
(86) Numéro de dépôt international: PCT/FR2019/052188
(87) Numéro de publication internationale: WO 2020/058637

(56) Documents cités:
- CA-A1- 2 185 080
- GB-A- 2 466 823
- US-A- 3 841 661
- US-A- 4 350 199

## Description

L'invention concerne une carrosserie, notamment de véhicule routier ou ferroviaire.

Elle concerne en particulier une carrosserie, encore appelée caisse, apte à être montée sur le châssis de véhicule routier ou ferroviaire de transport de marchandises, tel qu'un camion, un semi-remorque, une remorque ou un porteur, ou destinée à former un conteneur.

Elle concerne plus particulièrement une carrosserie comprenant des parois délimitant une enceinte définissant un espace de chargement, au moins l'une des parois de ladite carrosserie comprenant au moins un dispositif de fermeture, ce dispositif de fermeture comprenant un dormant et un ouvrant, le dormant comprenant deux rails de guidage parallèles délimitant un chemin de guidage courbe comprenant, entre une première portion rectiligne et une deuxième portion rectiligne, une portion courbe , l'ouvrant, disposé le long de la première portion rectiligne en position fermée, étant monté, par l'intermédiaire d'organes de roulement, mobile à coulissement le long de la portion courbe du chemin de guidage pour le passage d'une position fermée à une position ouverte.

La réalisation d'une carrosserie disposant d'un ouvrant déplaçable le long d'un chemin de guidage courbe pour s'effacer au moins partiellement à l'intérieur de l'enceinte en position ouverte de l'ouvrant est connue, comme l'illustre la demande de brevet CA-2.185.080. Jusqu'à présent cet ouvrant est, à la manière d'une porte sectionnelle, formé de panneaux articulés reliés entre eux par des liaisons pivot à axe pivot parallèle. L'inconvénient d'un dispositif de fermeture comprenant un tel ouvrant est son poids. On est donc à la recherche de solutions permettant de réduire le poids des dispositifs de fermeture à ouvrant coulissant pour permettre l'installation de tels dispositifs de fermeture notamment sur le châssis d'un véhicule léger de transport de charge.

Un but de l'invention est de proposer une carrosserie dont le dispositif de fermeture comprend un ouvrant coulissant de poids réduit.

A cet effet, l'invention a pour objet une carrosserie notamment de véhicule routier comprenant des parois délimitant une enceinte définissant un espace de chargement, au moins l'une des parois de ladite carrosserie comprenant au moins un dispositif de fermeture, ce dispositif de fermeture comprenant un dormant et un ouvrant, le dormant comprenant deux rails de guidage parallèles délimitant un chemin de guidage courbe comprenant, entre une première portion rectiligne et une deuxième portion rectiligne, une portion courbe, l'ouvrant, disposé le long de la première portion rectiligne en position fermée, étant monté, par l'intermédiaire d'organes de roulement, mobile à coulissement le long de la portion courbe du chemin de guidage pour le passage d'une position fermée à une position ouverte, caractérisée en ce que l'ouvrant comprend une ossature et une couverture souple, telle qu'une bâche, de recouvrement partiel de l'ossature et couplée à ladite ossature, en ce que ladite ossature comprend deux longerons, équipés des organes de roulement, et des traverses, en ce que chaque longeron est formée d'une pluralité de sections de longeron reliées les unes aux autres par des liaisons pivot d'axe pivot parallèle, en ce que chaque section de l'un des longerons est reliée à la section en regard de l'autre des longerons par au moins l'une des traverses, en ce que les axes pivot des liaisons pivot des sections de longeron en regard sont coaxiaux, et en ce que, le dispositif de fermeture présente, lors du passage de l'ouvrant de la position fermée à la position ouverte, au moins une configuration dans laquelle au moins deux des sections de longeron reliées par une liaison pivot forment entre elles un angle non plat ouvert en direction de l'intérieur de l'enceinte avec l'axe pivot de la liaison pivot desdites sections de longeron qui s'étend du côté de la face externe tournée vers l'extérieur de l'enceinte de la couverture, cette couverture reposant par sa face interne, tournée vers l'intérieur de l'enceinte, sur au moins une partie des traverses.

L'utilisation à titre de couverture d'une couverture souple en remplacement de panneaux rigides permet d'alléger le poids du dispositif. Le positionnement de l'axe pivot de la liaison pivot de section de longeron qui forment entre elles un angle non plat ouvert vers l'intérieur de l'enceinte du côté de la face externe de la couverture, en position ouverte de l'ouvrant, cette couverture reposant par sa face interne sur les traverses, permet, lors du passage de l'ouvrant de la position ouverte à la position fermée, le passage de la couverture souple d'un état relâché à un état tendu. En effet, la couverture est apte à couper l'angle formé par les sections de longeron entre elles au niveau de la portion courbe du chemin de guidage de sorte que l'axe pivot de la liaison pivot desdites sections de longeron entre elles s'étend du côté de la face externe de la couverture dans cette configuration. Ainsi, lors du retour en position alignée des sections de longeron, la couverture tend au moins dans un premier temps à se rapprocher de l'axe pivot, ce qui provoque en parallèle une tension de ladite couverture. Le passage de la couverture entre un état tendu en position fermée de l'ouvrant et un état relâché lorsque l'ouvrant circule dans la portion courbe du chemin de guidage est obtenu par simple déplacement de l'ouvrant le long du chemin de guidage sans qu'une opération supplémentaire de relâchement ou de tension de la couverture ne soit réalisée par l'opérateur manipulant l'ouvrant. Il en résulte une simplicité d'utilisation. En outre, il n'est pas nécessaire de disposer d'une couverture élastiquement déformable. La présence de traverses côté face interne de la couverture permet d'éviter l'endommagement de la couverture par des charges se déplaçant à l'intérieur de l'espace de chargement délimité par l'enceinte.

Selon un mode de réalisation de l'invention, les axes pivot des liaisons pivot sont en position fermée de l'ouvrant disposés dans un plan coplanaire à la couverture ou dans un plan s'étendant côté face interne de la couverture. Les axes pivot sont ainsi aptes à s'étendre de part et d'autre de la couverture pour obtenir un relâchement ou une tension automatique de la couverture par simple manipulation de l'ouvrant.

Selon un mode de réalisation de l'invention, au moins l'un des organes de roulement est un organe rotatif dont l'axe de rotation est coaxial à l'axe pivot d'une liaison pivot entre deux sections de longeron. Il en résulte une simplicité de montage et de fonctionnement du dispositif de fermeture.

Selon un mode de réalisation de l'invention, au moins l'une des liaisons pivot entre deux sections de longeron comprend une douille coaxiale à l'axe pivot de ladite liaison pivot et l'un des organes de roulement est équipé d'un axe support inséré au moins partiellement dans la douille.

Selon un mode de réalisation de l'invention, la douille de la liaison pivot entre les deux sections de longeron s'étend entre les branches d'une chape portée par l'une des deux sections de longeron, l'autre section de longeron étant munie d'un orifice traversant par l'intermédiaire duquel cette autre section de longeron est enfilée sur la douille de manière libre à pivotement pour un déplacement angulaire des sections de longeron entre elles.

Selon un mode de réalisation de l'invention, les traverses sont fixées aux sections de longeron par des organes de fixation et la chape est fixée à la section de longeron qui la porte par au moins un organe de fixation commun à l'organe de fixation d'une traverse à ladite section de longeron.

Selon un mode de réalisation de l'invention, les première et deuxième portions rectilignes du chemin de guidage forment sensiblement un angle droit entre elles et la deuxième portion rectiligne du chemin de guidage s'étend à l'intérieur de l'enceinte sensiblement parallèlement à l'une des parois de délimitation de l'enceinte.

Selon un mode de réalisation de l'invention, au moins l'une des sections de longeron présente dans sa zone de raccordement à une section de longeron adjacente une surface contre laquelle la section de longeron adjacente est apte à prendre appui en position alignée desdites sections de longeron, cette surface d'appui formant, en position alignée desdites sections de longeron, une butée de limitation en déplacement angulaire de ladite section de longeron angulaire adjacente dans le sens d'un pivotement de ladite section de longeron adjacente en direction de l'extérieur de l'enceinte.

Selon un mode de réalisation de l'invention, la couverture souple est disposée entre les longerons de l'ossature et le dispositif de fermeture comprend des profilés d'habillage s'étendant au moins le long de la première portion rectiligne du chemin de guidage, chaque profilé d'habillage étant configuré pour masquer au moins l'espace laissé libre entre un bord de la couverture et un longeron à l'état positionné de l'ouvrant en position fermée.

Selon un mode de réalisation de l'invention, l'enceinte qui est délimitée par des parois à savoir une paroi formant plancher, une paroi formant plafond et des parois latérales est une enceinte de forme générale parallélépipédique et au moins l'une des parois comprenant un dispositif de fermeture est une paroi latérale.

L'invention sera bien comprise à la lecture de la description suivante d'exemples de réalisation, en référence aux dessins annexés dans lesquels :

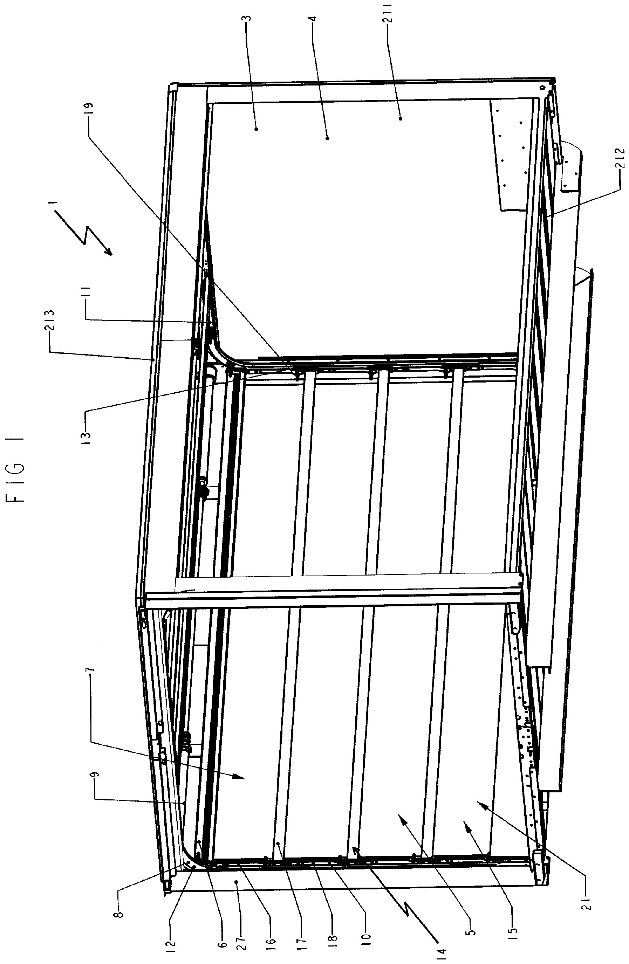

[Fig. 1] représente une vue en perspective d'une carrosserie conforme à l'invention, certaines parois de la carrosserie ayant été partiellement représentées pour mieux visualiser l'intérieur de la carrosserie, l'ouvrant du dispositif de fermeture étant représenté en position fermée ;

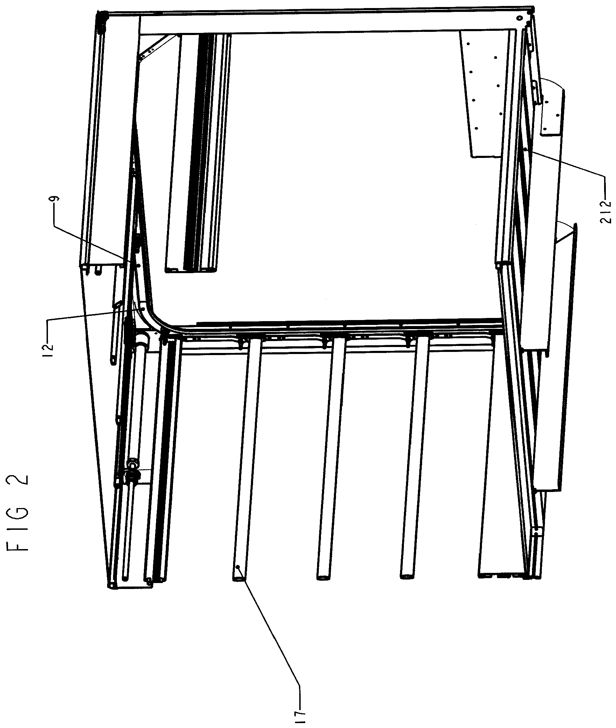

[Fig. 2] représente une vue partielle en perspective de la carrosserie de la figure 1 en position partiellement ouverte du dispositif de fermeture ;
[Fig. 3] représente, sous forme de deux vues partielles de côté, le positionnement relatif des axes pivot et de la couverture dans la configuration dans laquelle au moins deux des sections de longerons reliées par une liaison pivot forment entre elles un angle non plat ouvert en direction de la direction de l'enceinte ;

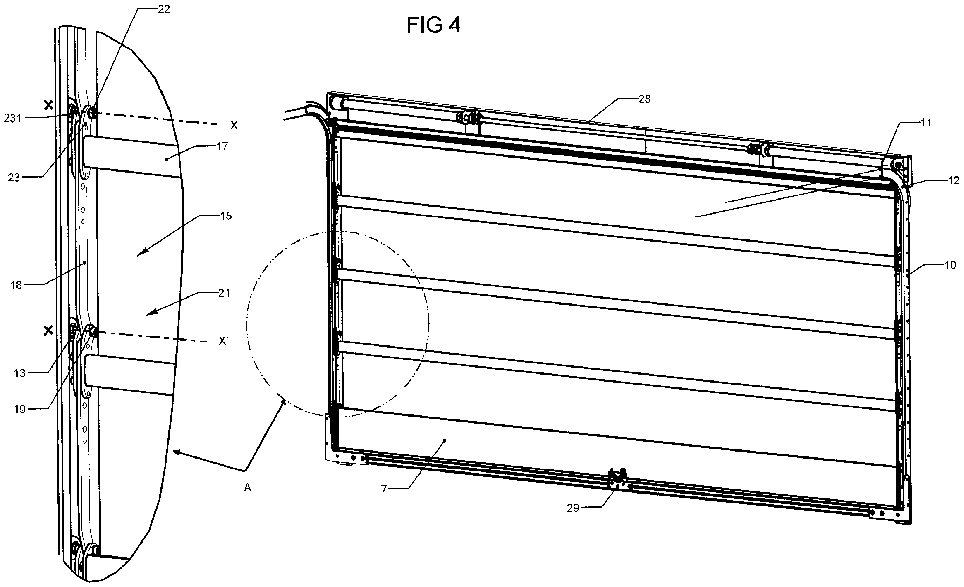

[Fig. 4] représente une vue en perspective d'une paroi de carrosserie équipée d'un dispositif de fermeture prise du côté de l'intérieur de l'enceinte avec une vue de détail A ;

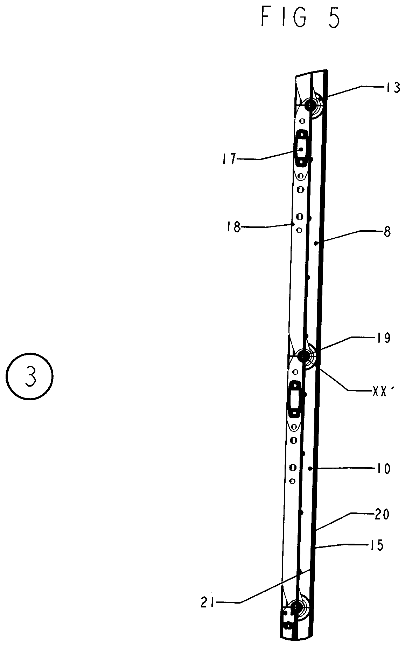

[Fig. 5] représente une vue partielle d'un dispositif de fermeture en position fermée de l'ouvrant, la couverture étant représentée par un trait épais ;

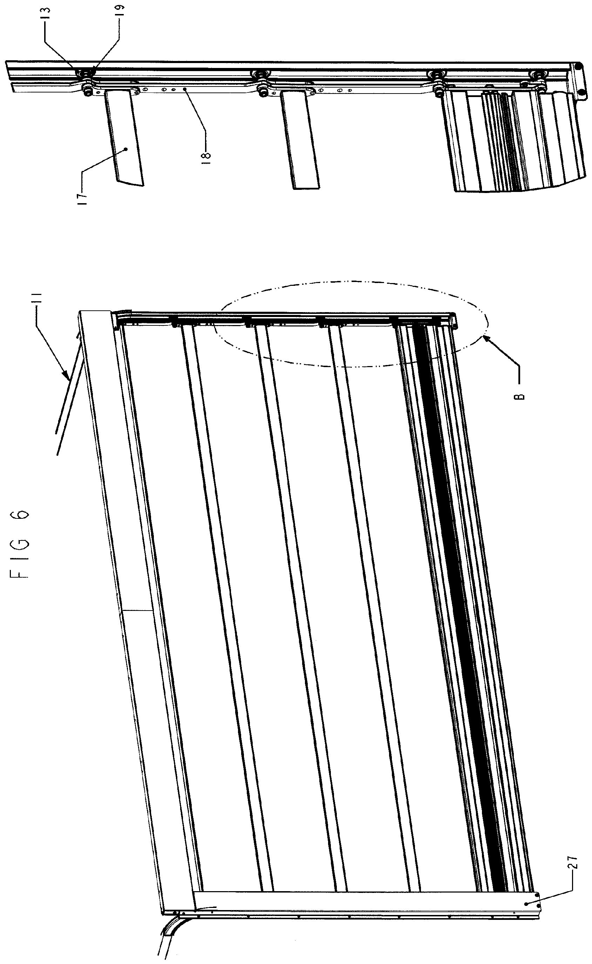

[Fig. 6] représente une vue en perspective prise depuis l'extérieur de l'enceinte d'une paroi de carrosserie équipée d'un dispositif de fermeture exempt de couverture avec une vue de détail B ;
[Fig. 7] représente une vue en perspective d'une traverse à l'état couplé à deux sections de longeron ;
[Fig. 8] représente deux vues de détail C de la figure 7, l'une en position éclatée des éléments, l'autre en position assemblée des éléments et
[Fig. 9] représente une vue de détail de deux sections de longeron, l'une en position alignée des sections de longeron, l'autre en position non alignée des sections de longeron.

La carrosserie 1, objet de l'invention, comprend des parois 211, 212, 213 délimitant une enceinte 3 définissant un espace 4 de chargement. Dans l'exemple représenté, les parois comprennent une paroi 212 formant plancher, une paroi 213 formant plafond et des parois 211 latérales et l'enceinte est une enceinte de forme parallélépipédique. Cette carrosserie 1 de type caisse peut être montée sur le châssis d'un véhicule de transport de marchandise routier ou ferroviaire, tel qu'un camion, un semi-remorque, une remorque, un porteur ou autre. Cette carrosserie 1 peut encore former un conteneur manipulable à l'aide d'une grue. Au moins l'une des parois, en l'occurrence ici une paroi 211 latérale de l'enceinte 3, comprend un dispositif 5 de fermeture. Ce dispositif 5 de fermeture peut former tout ou partie de ladite paroi. Dans l'exemple représenté, ce dispositif 5 de fermeture s'insère entre des montants formant une partie de la paroi latérale comprenant le dispositif 5 de fermeture. Une même paroi peut comprendre un ou plusieurs dispositifs de fermeture.

Ce dispositif 5 de fermeture comprend un dormant 6 et un ouvrant 7. Le dormant 6 comprend deux rails 8 de guidage parallèles délimitant un chemin 9 de guidage courbe à concavité tournée vers l'intérieur de l'enceinte 3. Ces rails 8 de guidage sont des rails de guidage courbes pour délimiter un chemin 9 de guidage courbe comprenant une portion 12 courbe à concavité tournée vers l'intérieur de l'enceinte 3 entre deux portions rectilignes, à savoir une première portion 10 rectiligne et une deuxième portion 11 rectiligne. Les portions rectilignes du chemin 9 de guidage forment sensiblement un angle droit entre elles, c'est-à-dire un angle compris entre 80 et 100°. La première portion 10 rectiligne s'étend généralement de manière coplanaire avec la paroi équipée du dispositif 5 de fermeture, à savoir ici une paroi 211 latérale. La deuxième portion 11 rectiligne s'étend à l'intérieur de l'enceinte 3, de préférence parallèlement à une autre paroi de l'enceinte jouxtant la paroi équipée du dispositif 5 de fermeture, en l'occurrence ici la paroi 213 formant plafond. L'ouvrant 6 est quant à lui disposé le long de la première portion 10 rectiligne en position fermée, et est monté, à l'aide d'organes 13 de roulement équipant ledit ouvrant mobile à coulissement le long du chemin 9 de guidage depuis la première portion 10 rectiligne en direction de la deuxième portion 11 rectiligne en passant par la portion 12 courbe du chemin 9 de guidage pour son passage de la position fermée à la position ouverte.

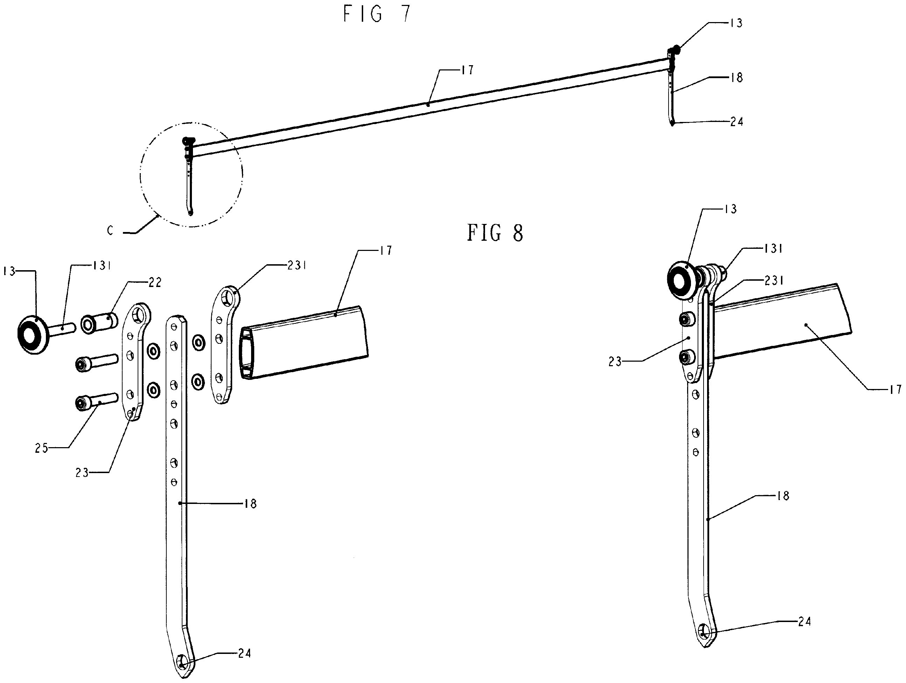

Cet ouvrant 6 comprend une ossature 14 et une couverture 15 souple. L'ossature 14 comprend deux longerons 16 parallèles. Chaque longeron 16 est équipé d'une partie des organes 13 de roulement de l'ouvrant 6 pour le montage à coulissement de l'ouvrant 6 le long du chemin 9 de guidage. L'ossature 14 comprend encore des traverses 17 reliant chacune les longerons 16 entre eux. Chaque longeron 16 est un longeron articulé formé d'une pluralité de sections 18 de longeron reliées les unes aux autres par des liaisons 19 pivot d'axe pivot XX' parallèle. Ces axes XX' pivot s'étendent parallèlement aux traverses 17. Dans l'exemple représenté, chaque longeron 16 comprend cinq sections de longeron. Indépendamment du nombre de sections de longeron, chaque longeron 16 comprend deux sections de longeron d'extrémité et une ou plusieurs sections de longeron intermédiaires disposées entre les sections de longeron d'extrémité. Comme mentionné ci-dessus, chaque section 18 de longeron est reliée à une section 18 de longeron adjacente par une liaison 19 pivot. Les liaisons 19 pivot présentent des axes XX' pivot parallèles entre eux. Chaque section 18 de longeron de l'un des deux longerons est par ailleurs reliée à la section 18 de longeron en regard de l'autre des deux longerons 16 par au moins une traverse 17. Dans les exemples représentés, chaque section 18 de longeron est reliée à la section de longeron en regard par une seule traverse 17. Chaque traverse 17 s'étend donc orthogonalement à deux sections 18 de longeron qu'elle relie entre eux pour former un ensemble conforme à celui représenté à la figure 7. Les axes XX' pivot des liaisons 19 pivot des sections 18 de longeron en regard sont coaxiaux. Dans les exemples représentés, chaque organe 13 de roulement est un organe rotatif dont l'axe de rotation est coaxial à l'axe XX' pivot d'une liaison 19 pivot entre deux sections 18 de longeron. En pratique, chaque liaison 19 pivot entre deux sections 18 de longeron comprend une douille 22 coaxiale à l'axe XX' pivot de ladite liaison pivot et chaque organe 13 de roulement est équipé d'un axe 131 support coaxial à l'axe de rotation 13 de roulement et inséré au moins partiellement dans la douille 22. La douille 22 de la liaison 19 pivot entre deux sections 18 de longeron s'étend entre les branches 231 d'une chape 23 portée par l'une des sections 18 de longeron. L'autre section 18 de longeron est munie d'un orifice 24 traversant par l'intermédiaire duquel cette autre section 18 de longeron est enfilée sur la douille 22 de manière libre à pivotement pour un déplacement angulaire des sections 18 de longeron entre elles.

Pour faciliter le montage, les traverses 17 sont fixées aux sections 18 de longeron par des organes 25 de fixation, tels que des vis, et la chape 23 est fixée à la section 18 de longeron qui la porte par au moins un organe 25 de fixation, tel qu'une vis, commun à l'organe 25 de fixation d'une traverse à ladite section 18 de longeron.

Dans les exemples représentés, chaque section 18 de longeron est formée par une lame en métal de même que les branches de la chape. La couverture 15 est quant à elle une couverture souple, telle qu'une bâche. Cette couverture 15 peut être élastiquement déformable ou non. Dans les exemples représentés, cette couverture 15 est non élastiquement déformable et est formée par une toile imperméable à l'eau. Cette couverture 15 est couplée à l'ossature 14 au niveau des sections d'extrémité des longerons.

Dans l'exemple représenté, la couverture 15 souple est fixée à chacune de ses extrémités à une traverse d'extrémité. Cette couverture 15 présente une face 21 interne tournée vers l'intérieur de l'enceinte 3, c'est-à-dire vers l'intérieur, en particulier vers le centre, de la courbe formée par le chemin 9 de guidage. Cette couverture 15 présente également une face 20 externe opposée à la face 21 interne et tournée vers l'extérieur de l'enceinte 3.

La couverture 15 est positionnée à recouvrement partiel des traverses 17 par sa face 21 interne qui s'étend en regard des traverses 17. Cette couverture 15 souple est disposée entre les longerons 16 de l'ossature 14. Le dispositif 5 de fermeture comprend encore des profilés 27 d'habillage s'étendant au moins le long de la première portion 10 rectiligne du chemin 9 de guidage. Chaque profilé 27 d'habillage est configuré pour masquer au moins l'espace laissé libre entre un bord de la couverture 15 et un longeron 16 à l'état positionné de l'ouvrant 7 en position fermée.

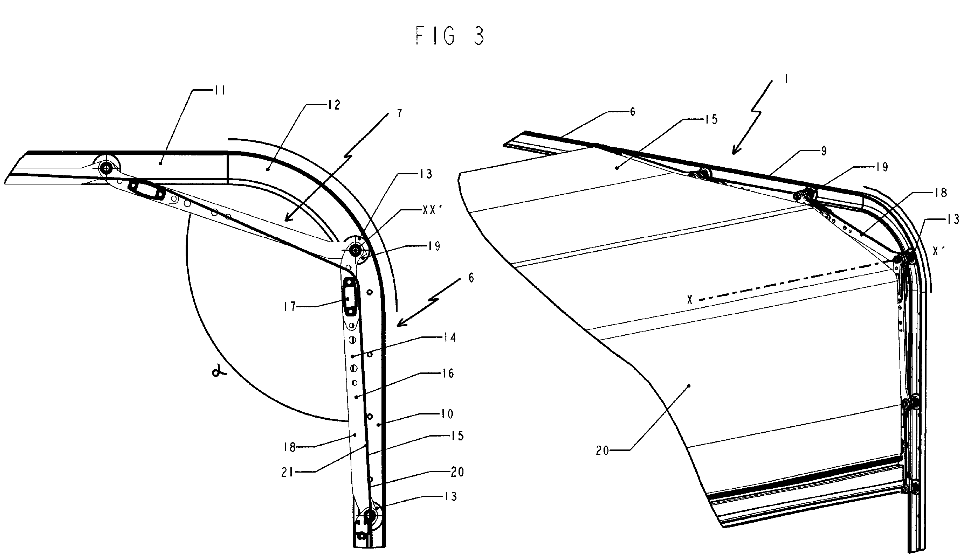

Généralement, la paroi de la carrosserie équipée du dispositif 5 de fermeture comprend également lorsqu'il s'agit d'une paroi latérale, d'une traverse supérieure disposée entre les profilés d'habillage. Les profilés 27 d'habillage sont également des profilés de structure auxquels sont fixés les rails 8 du chemin 9 de guidage. Cette traverse supérieure qui s'étend parallèlement à la face formant plafond de la carrosserie masque un mécanisme 28 de commande en ouverture/fermeture de l'ouvrant. Ce mécanisme 28 de commande d'ouvrant coulissant est bien connu à ceux versés dans cet art et ne sera pas décrit en détail. Ce mécanisme 28 de commande d'ouvrant comprend généralement un arbre tambour chargé par ressort autour duquel un câble, s'étendant entre l'arbre et la partie de l'ouvrant en appui sur la face formant plancher de l'ouvrant en position fermée de l'ouvrant, est apte à s'enrouler. Le ressort tend à rappeler l'arbre dans une position dans laquelle le câble s'enroule autour dudit arbre et rappelle l'ouvrant en position ouverte. Cet ouvrant 7 est maintenu en position fermée par un organe 29 de fermeture, tel qu'un loquet, qui s'étend entre la traverse d'extrémité inférieure de l'ouvrant et la face formant plancher de l'enceinte. L'actionnement du loquet permet une libération de l'ouvrant 7 et, par suite, son déplacement à coulissement depuis la position fermée vers la position ouverte. Le retour à la position fermée s'opère par traction de l'opérateur sur l'ouvrant 7 à l'encontre de l'action du ressort. En position fermée de l'ouvrant, les axes XX' pivot des liaisons 19 pivot sont disposés dans un plan coplanaire à la couverture 15 ou dans un plan s'étendant côté face interne de la couverture 15. Lors du passage de l'ouvrant 7 de la position fermée à la position ouverte, le dispositif 5 de fermeture présente au moins une configuration dans laquelle au moins deux des sections 18 de longeron reliées par une liaison 19 pivot forment entre elles un angle α non plat ouvert en direction de l'intérieur de l'enceinte 3 avec l'axe XX' pivot de la liaison 19 pivot desdites sections 18 de longeron qui s'étend du côté de la face 20 externe tournée vers l'extérieur de l'enceinte 3 de la couverture 15, cette couverture 15 reposant par sa face 21 interne, tournée vers l'intérieur de l'enceinte 3, sur au moins une partie des traverses 17. La couverture 15 repose par simple appui sur lesdites traverses de sorte qu'un déplacement relatif entre couverture 15 et traverses 17 est possible. Cette configuration est représentée à la figure 3. Dans cette configuration, un organe 13 de roulement est, au niveau de chaque rail de guidage, disposé dans la portion courbe du chemin 9 de guidage. L'axe de rotation de cet organe 13 de roulement est coaxial à l'axe XX' de la liaison 19 pivot reliant les sections 18 de longeron qui forment entre elles un angle α non plat ouvert en direction de l'intérieur de l'enceinte 3. Cet angle α est ici voisin de 120°.

Cette possibilité de la couverture d'être montée mobile par rapport aux axes pivot dans le sens d'un écartement ou d'un rapprochement desdits axes XX' pivot, et cette possibilité pour les axes XX' pivot de s'étendre d'un côté ou de l'autre côté de la couverture ou dans le plan de la couverture permet, lors du passage de l'ouvrant de la position ouverte à la position fermée, le passage de la couverture souple d'un état relâché à un état tendu.

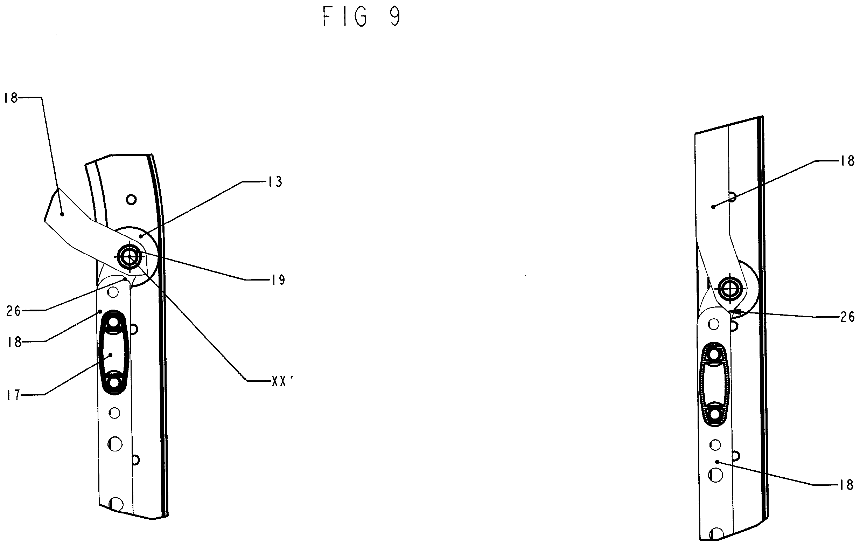

Pour parfaire l'ensemble, chaque section 18 de longeron présente, dans sa zone de raccordement à une section 18 de longeron adjacente, une surface 26 contre laquelle la section 18 de longeron adjacente est apte à prendre appui en position alignée desdites sections 18 de longeron. Cette surface 26 d'appui forme, en position alignée desdites sections 18 de longeron, une butée de limitation en déplacement angulaire de la section 18 de longeron adjacente dans le sens d'un pivotement de la section 18 de longeron adjacente en direction de l'extérieur de l'enceinte 3. Cette butée est illustrée à la figure 9.

Le fonctionnement du dispositif de fermeture pour le passage de l'ouvrant de la position fermée à la position ouverte est tel que suit. L'organe de fermeture, tel qu'un loquet, maintenant l'ouvrant en position fermée est déverrouillé. L'ouvrant est, sous l'action du ressort équipant le dispositif 28 de commande en ouverture/fermeture de l'ouvrant, entraîné en déplacement à coulissement le long du chemin de guidage depuis la première portion 10 rectiligne qu'il occupe en position fermée vers la deuxième portion 11 rectiligne. Au cours de ce déplacement à coulissement, la couverture tend à passer d'un état tendu à un état relâché, l'ouvrant étant en position ouverte positionné à cheval sur la deuxième portion rectiligne et la portion courbe de chemin 9 de guidage. Le retour en position fermée de l'ouvrant par déplacement à coulissement en sens opposé dans le chemin 9 de guidage ramène automatiquement la couverture à l'état tendu en position fermée de l'ouvrant. Il en résulte une simplicité d'utilisation d'un tel dispositif 5 de fermeture qui se caractérise également par sa légèreté.

## Revendications

1. Carrosserie (1), notamment de véhicule routier, comprenant des parois (211, 212, 213) délimitant une enceinte (3) définissant un espace (4) de chargement, au moins l'une (211) des parois (211, 212, 213) de ladite carrosserie (1) comprenant au moins un dispositif (5) de fermeture, ce dispositif (5) de fermeture comprenant un dormant (6) et un ouvrant (7), le dormant (6) comprenant deux rails (8) de guidage parallèles délimitant un chemin (9) de guidage courbe comprenant, entre une première portion (10) rectiligne et une deuxième portion (11) rectiligne, une portion (12) courbe, l'ouvrant (6), disposé le long de la première portion (10) rectiligne en position fermée, étant monté, par l'intermédiaire d'organes (13) de roulement, mobile à coulissement le long de la portion (12) courbe du chemin (9) de guidage pour le passage d'une position fermée à une position ouverte, l'ouvrant (6) comprenant une ossature (14) et une couverture (15) souple, telle qu'une bâche, de recouvrement partiel de l'ossature (14) et couplée à ladite ossature (14), ladite ossature (14) comprenant deux longerons (16), équipés des organes (13) de roulement, et des traverses (17), chaque longeron (16) étant formée d'une pluralité de sections (18) de longeron reliées les unes aux autres par des liaisons (19) pivot d'axe pivot (XX') parallèle, chaque section (18) de l'un des longerons (16) étant reliée à la section (18) en regard de l'autre des longerons (16) par au moins l'une des traverses (17), les axes (XX') pivot des liaisons (19) pivot des sections (18) de longeron en regard sont coaxiaux, la carrosserie étant **caractérisée en ce que**, le dispositif (5) de fermeture présente, lors du passage de l'ouvrant (7) de la position fermée à la position ouverte, au moins une configuration dans laquelle au moins deux des sections (18) de longeron reliées par une liaison (19) pivot forment entre elles un angle (a) non plat ouvert en direction de l'intérieur de l'enceinte (3) avec l'axe (XX') pivot de la liaison (19) pivot desdites sections (18) de longeron qui s'étend du côté de la face (20) externe tournée vers l'extérieur de l'enceinte (3) de la couverture (15), cette couverture (15) reposant par sa face (21) interne, tournée vers l'intérieur de l'enceinte (3), sur au moins une partie des traverses (17).

2. Carrosserie (1) selon la revendication 1, **caractérisée en ce que** les axes (XX') pivot des liaisons (19) pivot sont en position fermée de l'ouvrant (7) disposés dans un plan coplanaire à la couverture (15) ou dans un plan s'étendant côté face (20) interne de la couverture (15).

3. Carrosserie (1) selon l'une des revendications 1 ou 2, **caractérisée en ce qu'**au moins l'un des organes (13) de roulement est un organe rotatif dont l'axe de rotation est coaxial à l'axe (XX') pivot d'une liaison (19) pivot entre deux sections (18) de longeron.

4. Carrosserie (1) selon l'une des revendications 1 à 3, **caractérisée en ce qu'**au moins l'une des liaisons (19) pivot entre deux sections (18) de longeron comprend une douille (22) coaxiale à l'axe (XX') pivot de ladite liaison (19) pivot et **en ce que** l'un des organes (13) de roulement est équipé d'un axe (131) support inséré au moins partiellement dans la douille (22).

5. Carrosserie (1) selon la revendication 4, **caractérisée en ce que** la douille (22) de la liaison (19) pivot entre les deux sections (18) de longeron s'étend entre les branches (231) d'une chape (23) portée par l'une des deux sections (18) de longeron, l'autre section (18) de longeron étant munie d'un orifice (24) traversant par l'intermédiaire duquel cette autre section (18) de longeron est enfilée sur la douille (22) de manière libre à pivotement pour un déplacement angulaire des sections (18) de longeron entre elles.

6. Carrosserie (1) selon la revendication 5, **caractérisée en ce que** les traverses (17) sont fixées aux sections (18) de longeron par des organes (25) de fixation et **en ce que** la chape (23) est fixée à la section (18) de longeron qui la porte par au moins un organe (25) de fixation commun à l'organe (25) de fixation d'une traverse (17) à ladite section (18) de longeron.

7. Carrosserie (1) selon l'une des revendications 1 à 6, **caractérisée en ce que** les première et deuxième portions (10, 11) rectilignes du chemin (9) de guidage forment sensiblement un angle droit entre elles et **en ce que** la deuxième portion (11) rectiligne du chemin (9) de guidage s'étend à l'intérieur de l'enceinte (3) sensiblement parallèlement à l'une (23) des parois (211, 212, 213) de délimitation de l'enceinte (3).

8. Carrosserie (1) selon l'une des revendications 1 à 7, **caractérisée en ce qu'**au moins l'une des sections (18) de longeron présente, dans sa zone de raccordement à une section (18) de longeron adjacente, une surface (26) contre laquelle la section (18) de longeron adjacente est apte à prendre appui en position alignée desdites sections (18) de longeron, cette surface (26) d'appui formant, en position alignée desdites sections (18) de longeron, une butée de limitation en déplacement angulaire de ladite section (18) de longeron angulaire adjacente dans le sens d'un pivotement de ladite section (18) de longeron adjacente en direction de l'extérieur de l'enceinte (3).

9. Carrosserie (1) selon l'une des revendications 1 à 8, **caractérisée en ce que** la couverture (15) souple est disposée entre les longerons (16) de l'ossature (14) et **en ce que** le dispositif (5) de fermeture comprend des profilés (27) d'habillage s'étendant au moins le long de la première portion (10) rectiligne du chemin (9) de guidage, chaque profilé (27) d'habillage étant configuré pour masquer au moins l'espace laissé libre entre un bord de la couverture (15) et un longeron (16) à l'état positionné de l'ouvrant (7) en position fermée.

10. Carrosserie (1) selon l'une des revendications 1 à 9, **caractérisée en ce que** l'enceinte (3) qui est délimitée par des parois (211, 212, 213) à savoir une paroi (212) formant plancher, une paroi (213) formant plafond et des parois (211) latérales est une enceinte (3) de forme générale parallélépipédique et **en ce qu'**au moins l'une des parois (211, 212, 213) comprenant un dispositif (5) de fermeture est une paroi (211) latérale.

## Patentansprüche

1. Karosserie (1), insbesondere für ein Straßenfahrzeug, umfassend Wände (211, 212, 213), die einen Innenraum (3) begrenzen, der einen Laderaum (4) definiert, wobei mindestens eine (211) der Wände (211, 212, 213) der Karoserie (1) mindestens eine Verschlussvorrichtung (5) umfasst, wobei diese Verschlussvorrichtung (5) eine Einfassung (6) und einen Flügel (7) umfasst, wobei die Einfassung (6) zwei parallele Führungsschienen (8) umfasst, die einen gekrümmten Führungsweg (9) begrenzen, der zwischen einem ersten geradlinigen Abschnitt (10) und einem zweiten geradlinigen Abschnitt (11) einen gekrümmten Abschnitt (12) umfasst, wobei der Flügel (6), angeordnet entlang dem ersten geradlinigen Abschnitt (10) in der geschlossenen Position, mit Hilfe von Rollorganen (13), beweglich gleitend entlang dem gekrümmten Abschnitt (12) des Führungswegs (9) für den Übergang von einer geschlossenen Position in eine offene Position montiert ist, wobei der Flügel (6) ein Gerüst (14) und eine flexibel Abdeckung (15), wie z. B. eine Plane, zur teilweisen Abdeckung des Gerüsts (14) umfasst und an das Gerüst (14) gekoppelt ist, wobei das Gerüst (14) zwei Längsträger (16), die mit Rollorganen (13) ausgestattet sind, und Querträger (17) umfasst, wobei jeder Längsträger (16) von einer Vielzahl von Längsträgersektionen (18) gebildet ist, die aneinander durch Schwenkverbindungen (19) einer parallelen Schwenkachse (XX') verbunden sind, wobei jede Sektion (18) eines der Längsträger (16) mit der Sektion (18) gegenüber dem anderen der Längsträger (16) durch mindestens einen der Querträger (17) verbunden ist, wobei die Schwenkachsen (XX') der Schwenkverbindungen (19) der gegenüber liegenden Schwenkträgersektionen (18) koaxial sind, wobei die Karosserie **dadurch gekennzeichnet ist, dass** die Verschlussvorrichtung (5) beim Übergang des Flügels (7) von der geschlossenen Position in die geöffnete Position mindestens ein Konfiguration aufweist, in der mindestens zwei der Längsträgersektionen (18) die durch eine Schwenkverbindung (19) verbunden sind, untereinander einen nicht flachen Winkel (α), der in Richtung des Inneren des Innenraums (3) offen ist, mit der Schwenkachse (XX') der Schwenkverbindung (19) der Längsträgersektionen (18) bilden, der sich von der Seite der äußeren Fläche (20), die hin zur Außenseite des Innenraums (3) der Abdeckung (15) gedreht ist, erstreckt, wobei diese Abdeckung (15) mit ihrer inneren Fläche (21), die hin zum Inneren des Innenraums (3) gedreht ist, auf mindestens einem Teil der Querträger (17) ruht.

2. Karosserie (1) nach Anspruch 1, **dadurch gekennzeichnet, dass** die Schwenkachsen (XX') der Schwenkverbindungen (19) in der geschlossenen Position des Flügels (7) in einer Ebene angeordnet sind, die komplanar zur Abdeckung (15) oder in einer Ebene ist, die sich von der Seite der inneren Fläche (20) der Abdeckung (15) erstreckt.

3. Karosserie (1) nach einem der Ansprüche 1 oder 2, **dadurch gekennzeichnet, dass** mindestens eines der Rollorgane (13) ein Drehorgan ist, dessen Rotationsachse koaxial mit der Schwenkachse (XX') einer Schwenkverbindung (19) zwischen zwei Längsträgersektionen (18) ist.

4. Karosserie (1) nach einem der Ansprüche 1 bis 3, **dadurch gekennzeichnet, dass** mindestens eine der Schwenkverbindungen (19) zwischen zwei Längsträgersektionen (18) eine koaxiale Hülse (22) zur Schwenkachse (XX') der Schwenkverbindung (19) umfasst, und dadurch, dass eines der Rollelemente (13) mit einer Stützachse (131) ausgestattet ist, die mindestens teilweise in die Hülse (22) eingeführt ist.

5. Karosserie (1) nach Anspruch 4, **dadurch gekennzeichnet, dass** sich die Hülse (22) der Schwenkverbindung (19) zwischen den zwei Längsträgersektionen (18) zwischen den Armen (231) einer Platte (23) erstreckt, die von einem der zwei Längsträgersektionen (18) getragen ist, wobei der andere Längsträgersektion mit einer Queröffnung (24) versehen ist, mit deren Hilfe diese andere Sektion (18) auf die Hülse (22) auf freie Weise schwenkend für eine Winkelverschiebung der Längsträgersektionen (18) untereinander eingefädelt ist.

6. Karosserie (1) nach Anspruch 5, **dadurch gekennzeichnet, dass** die Querträger (17) auf die Längsträgersektionen (18) durch Befestigungsorgane (25) befestigt sind, und dadurch, dass die Platte (23) an die Längsträgersektion (18) befestigt ist, die sie durch mindestens ein Befestigungsorgan (25) trägt, das dem Befestigungsorgan (25) eines Querträgers (17) an die Längsträgersektion (18) gemeinsam ist.

7. Karosserie (1) nach einem der Ansprüche 1 bis 6, **dadurch gekennzeichnet, dass** der erste und zweite geradlinige Abschnitt (10, 11) des Führungswegs (9) im Wesentlichen einen rechten Winkel zwischen sich bilden, und dadurch, dass sich der zweite geradlinige Abschnitt (11) des Führungswegs (9) in das Innere des Innenraums (3) im Wesentlichen parallel zu einer (23) der Begrenzungswände (211, 212, 213) des Innenraums (3) erstreckt.

8. Karosserie (1) nach einem der Ansprüche 1 bis 7, **dadurch gekennzeichnet, dass** mindestens eine der Längsträgersektionen (18) in ihrem Verbindungsbereich mit einer benachbarten Längsträgersektion (18) eine Oberfläche (26) aufweist, gegen die die benachbarte Längsträgersektion (18) ausgelegt ist, in der ausgefluchteten Position der Längsträgersektionen (18) aufzuliegen, wobei diese Auflageoberfläche (26) in der ausgefluchteten Position der Längsträgersektionen (18) einen Begrenzungsanschlag in Winkelverschiebung der benachbarten winkligen Längsträgersektion (18) im längs eines Schwenkens der benachbarten Längsträgersektion (18) in Richtung der Außenseite des Innenraums (3) bildet.

9. Karosserie (1) nach einem der Ansprüche 1 bis 8, **dadurch gekennzeichnet, dass** die flexible Abdeckung (15) zwischen den Längsträgern (16) des Gestells (14) angeordnet ist, und dadurch, dass die Verschlussvorrichtung (5) Blendleisten (27) umfasst, die sich mindestens entlang des ersten geradlinigen Abschnitts (10) des Führungswegs (9) erstrecken, wobei jede Blendleiste (27) konfiguriert ist, um mindestens den Raum zu verdecken, der zwischen einem Rand der Abdeckung (15) und einem Längsträger (16) im positionierten Zustand des Flügels (7) in der geschlossenen Position freigelassen ist.

10. Karosserie (1) nach einem der Ansprüche 1 bis 9, **dadurch gekennzeichnet, dass** der Innenraum (3), der von Wänden (211, 212, 213) begrenzt ist, d. h. einer Wand (212), die einen Boden bildet, einer Wand (213), die eine Decke bildet, und seitlichen Wänden (211) ein Innenraum (3) mit im allgemeinen parallelepipeder Form ist, und dadurch, dass mindestens eine der Wände (211, 212, 213), die eine Verschlussvorrichtung (5) umfasst, eine seitliche Wand (211) ist.

## Claims

1. Bodywork (1), in particular for a road vehicle, comprising walls (211, 212, 213) delimiting an enclosure (3) defining a loading space (4), at least one (211) of the walls (211, 212, 213) of said bodywork (1) comprising at least one closing device (5), this closing device (5) comprising a frame (6) and an opening panel (7), the frame (6) comprising two parallel guide rails (8) delimiting a curved guide path (9) comprising, between a first rectilinear portion (10) and a second rectilinear portion (11), a curved portion (12), the opening panel (6), arranged along the first rectilinear portion (10) in the closed position, being mounted, by means of rolling members (13), slidingly movable along the curved portion (12) of the guide path (9) for the passage from a closed position to an open position, the opening panel (6) comprising a framework (14) and a flexible cover (15), such as a tarp, for partially covering the framework (14) and coupled to said framework (14), said framework (14) comprising two longitudinal members (16), equipped with rolling members (13), and crossmembers (17), each longitudinal member (16) being formed by a plurality of longitudinal member sections (18) connected to one another by pivot links (19) with parallel pivot axis (XX'), each section (18) of one of the longitudinal members (16) being connected to the opposite section (18) of the other of the longitudinal members (16) by at least one of the crossmembers (17), the pivot axes (XX') of the pivot links (19) of the opposite longitudinal member sections (18) are coaxial, the bodywork being **characterized in that** the closing device (5) has, during the passage of the opening panel (7) from the closed position to the open position, at least one configuration in which at least two of the longitudinal member sections (18) connected by a pivot link (19) form a non-flat angle (α) between them open toward the inside of the enclosure (3) with the pivot axis (XX') of the pivot link (19) of said longitudinal member sections (18) extending from the side of the outer face (20) facing toward the outside of the enclosure (3) of the cover (15), this cover (15) resting by its inner face (21), facing toward the inside of the enclosure (3), on at least part of the crossmembers (17).

2. The bodywork (1) according to claim 1, **characterized in that** the pivot axes (XX') of the pivot links (19) are in the closed position of the opening panel (7) arranged in a plane coplanar to the cover (15) or in a plane extending on the inner face (20) side of the cover (15).

3. The bodywork (1) according to one of claims 1 or 2, **characterized in that** at least one of the rolling members (13) is a rotary member whose axis of rotation is coaxial with the pivot axis (XX') of a pivot link (19) between two longitudinal member sections (18).

4. The bodywork (1) according to one of claims 1 to 3, **characterized in that** at least one of the pivot links (19) between two longitudinal member sections (18) comprises a bush (22) coaxial with the pivot axis (XX') of said pivot link (19) and **in that** one of the rolling members (13) is equipped with a support axle (131) inserted at least partially into the bush (22).

5. The bodywork (1) according to claim 4, **characterized in that** the bush (22) of the pivot link (19) between the two longitudinal member sections (18) extends between the branches (231) of a yoke (23) carried by one of the two longitudinal member sections (18), the other longitudinal member section (18) being provided with a through orifice (24) by means of which this other longitudinal member section (18) is slipped onto the bush (22) pivoting freely for an angular displacement of the longitudinal member sections (18) relative to one another.

6. The bodywork (1) according to claim 5, **characterized in that** the crossmembers (17) are fixed to the longitudinal member sections (18) by attachment members (25) and **in that** the yoke (23) is attached to the longitudinal member section (18) that carries it by at least one attachment member (25), and to the attachment member (25) for attaching a crossmember (17) to said longitudinal member section (18).

7. The bodywork (1) according to one of claims 1 to 6, **characterized in that** the first and second rectilinear portions (10, 11) of the guide path (9) substantially form a right angle relative to one another and **in that** the second rectilinear portion (11) of the guide path (9) extends inside the enclosure (3) substantially parallel to one (23) of the walls (211, 212, 213) delimiting the enclosure (3).

8. The bodywork (1) according to one of claims 1 to 7, **characterized in that** at least one of the longitudinal member sections (18) has, in its zone for connection to an adjacent longitudinal member section (18), a surface (26) against which the adjacent longitudinal member section (18) is able to bear in the aligned position of said longitudinal member sections (18), this bearing surface (26) forming, in the aligned position of said longitudinal member sections (18), a stop for limiting the angular displacement of said adjacent angular longitudinal member section (18) in the direction of a pivoting of said adjacent longitudinal member section (18) toward the outside of the enclosure (3).

9. The bodywork (1) according to one of claims 1 to 8, **characterized in that** the flexible cover (15) is arranged between the longitudinal members (16) of the framework (14) and **in that** the closing device (5) comprises trim profiles (27) extending at least along the first rectilinear portion (10) of the guide path (9), each trim profile (27) being configured to hide at least the space left free between an edge of the cover (15) and a longitudinal member (16) in the state of the opening panel (7) in the closed position.

10. The bodywork (1) according to one of claims 1 to 9, **characterized in that** the enclosure (3), which is delimited by walls (211, 212, 213), namely a wall (212) forming a floor, a wall (213) forming a ceiling, and side walls (211), is a generally parallelepipedal enclosure (3) and **in that** at least one of the walls (211, 212, 213) comprising a closing device (5) is a side wall (211).
